# EUROPEAN PATENT APPLICATION

(11) **EP 4 729 907 A1**
(43) Date of publication of application: **22.04.2026**
(21) Application number: 25208114.6
(22) Date of filing: 10.10.2025
(51) Int. Cl.: G01L 1/24, G01L 9/00, G01L 11/02, G01M 11/08

(54) **FIBRE-OPTIC PRESSURE SENSOR**

(30) Priority: 17.10.2024 NL 2038854
(71) Applicant: Somni Corporation B.V., 2629 HD Delft (NL)
(72) Inventor: MEIJER, Eric, 2629 HD Delft (NL); NIEUWLAND, Remco Alexander, 2629 HD Delft (NL); KNOPPERS, Germán Enrique, 2629 HD Delft (NL)
(74) Representative: Custos IPC Coöperatie U.A.

(57) **Abstract**

Fibre-optic pressure sensor for measuring a fluid pressure, the sensor comprising:
- an elongated base frame having a longitudinal axis;
- a first pressure compartment having a variable size that is coupled to the elongated base frame, wherein the first pressure compartment comprises an input arranged to receive a fluid, the pressure of which is to be measured, wherein a movable outer end of the first pressure compartment is movable within the elongated base frame parallel to the longitudinal axis between a retracted position and an extended position;
- a biasing system arranged for urging the movable outer end of the first pressure compartment in a direction towards the retracted position;
- an optical fibre comprising a first connected section that is connected to the elongated base frame and a second connected section that is arranged to move upon a movement of the movable outer end of the first pressure compartment, wherein the optical fibre further comprises a first suspended section that is suspended in between the first connected section and the second connected section;
- a transfer member comprising a first pivotable arm that is pivotally coupled to the elongated base frame at a hinge point, wherein the movable outer end of the first pressure compartment is coupled at a coupling point, at a distance from the hinge point, to the first pivotable arm, such that a movement of the movable outer end of the first pressure compartment causes a pivoting movement of the first pivotable arm;
wherein the transfer member further comprises a fibre connecting section whereto the second connected section of the optical fibre is fixed, wherein the fibre connection section is arranged to move, upon a movement of the first pivotable arm, in at least a direction parallel to the longitudinal axis, such that the pivoting movement of the first pivotable arm causes a stretching or shortening of the first suspended section of the optical fibre.

## Description

The present invention relates to a fibre-optic pressure sensor and a method of manufacturing said fibre-optic pressure sensor.

Unlike traditional pressure sensors that use electronic or electrical measurement principles, fibre-optic pressure sensors use changes in light transmission through an optical fibre to detect pressure values. Fibre-optic pressure sensors are known to provide reliable measurement results and may be used in some of the harshest and/or challenging environments. They are ideal for measuring pressures of highly volatile fluids, such as hydrogen, as, due to the lack of electronics, the sensors are safe to use in potentially explosive situations. Additionally, as the data is transferred by means of light, use in situations having a high exposure to electro-magnetic radiation is also not a problem.

A typical fibre-optic pressure sensor employs an (expandable) bellow whose end is coupled to an optical fibre. The bellow expands, or shrinks, due to the (relative) pressure inside of the bellow, such that the optical fibre will experience a certain strain that can be measured, from which the (relative) pressure inside of the bellow can be deduced. However, depending on the application of use, a certain sensitivity and/or measurement range will be required. In these sensors, the sensitivity is determined by the cross-sectional surface of the bellows, that convert a certain (relative) pressure to a certain force and the stiffness properties of the optical fibre, which is predominantly determined by its diameter. The measurement range is these cases determined by a maximum strain of the optical fibre. A sensor requiring a different sensitivity would thereby typically require a bellow having a different diameter, which would typically require a different diameter housing, other components, and even assembly and/or manufacturing tools that are all dependent on the diameter of the bellows employed. As such, an efficient industrialization of such fibre-optic pressure sensors is difficult to obtain, leading to an inefficient production process requiring mainly manual labour, such that fibre-optic pressure sensor typically lose the competition to electrical pressure sensors that can be produced in a more efficient industrialized process.

The goal of the present invention is therefore to provide for a fibre-optic pressure sensor that can be customized to meet specific pressure sensitivity requirements without altering the geometric properties of the pressure compartment (e.g. the diameter of the bellows) or optical fibres employed, wherein at least some of the above mentioned problems are at least partially alleviated.

This goal is, at least partially met by, a fibre-optic pressure sensor for measuring a fluid pressure, the sensor comprising:
- a base frame, preferably an elongated base frame having a longitudinal axis;
- a first pressure compartment having a variable size that is coupled to the base frame, wherein the first pressure compartment comprises an input arranged to receive a fluid, the pressure of which is to be measured, wherein a movable outer end of the first pressure compartment is movable within the base frame along a first longitudinal axis of the first pressure compartment between a retracted position and an extended position;

- a biasing system arranged for urging the movable outer end of the first pressure compartment in a direction towards the retracted position;
- an optical fibre comprising a first connected section that is connected to the base frame and a second connected section that is arranged to move upon a movement of the movable outer end of the first pressure compartment, wherein the optical fibre further comprises a first suspended section that is suspended in between the first connected section and the second connected section, wherein a measurement section is arranged in said first suspended section;
- a transfer member comprising a first pivotable arm that is pivotally coupled to the base frame at a hinge point, wherein the movable outer end of the first pressure compartment is coupled at a coupling point, at a distance from the hinge point, to the first pivotable arm, such that a movement of the movable outer end of the first pressure compartment causes a pivoting movement of the first pivotable arm;
wherein the transfer member further comprises a fibre connecting section whereto the second connected section of the optical fibre is fixed, wherein the fibre connection section is arranged to move, upon a movement of the first pivotable arm, preferably in at least a direction parallel to the longitudinal axis of the elongated base frame and/or in at least a direction parallel to the first longitudinal axis, such that the pivoting movement of the first pivotable arm causes a stretching or shortening of the first suspended section of the optical fibre.

The fibre-optic pressure sensor according to the present disclosure operates in a similar manner as the known pressure sensors. A pressure differential between the first internal volume and exterior (i.e. external) of the first pressure compartment leads to a resultant force acting on the movable outer end which, depending on whether the pressure differential is positive or negative, wants to move in order to enable an expansion, or contraction, of the first pressure compartment, thereby balancing the internal and external pressures. At the same time, the biasing system, transfer member and optical fibre also provide for a set of forces acting on the movable outer end, such that a balance, that is dependent on the mechanical and geometric properties of the transfer member, mechanical properties of the biasing system, mechanical properties of the optical fibre and the pressure differential determines the position wherein the movable outer end is moved to. As the position of the movable outer end can be measured, by the measurement section, from the stretching or shortening of the first suspended section of the optical fibre, the pressure differential can be determined. From the pressure differential, an absolute pressure can subsequently be deduced. The suspended section is preferably arranged with a tensile pre-stress, such that the suspended section is pre-stretched, thereby allowing to also accurately measuring a shortening of the suspended section (as this is effectively a reduction of the pre-stretching).

The hinge point of the first pivotable arm may be a discrete hinge having therein a shaft that rotates in a suitable bearing and/or bushing, or may be formed as a flexible hinge. A flexible hinge acts as it allows for an elastic deformation of the hinge. A predefined rotational stiffness may then easily be tuned, by means of the choice of material (i.e. on the basis of the modulus of elasticity) or by varying the geometric properties of the flexible hinge (e.g. a length and/or thickness at the hinge point).

In the present disclosure, a characteristic of the fibre-optic pressure sensor, such as a sensitivity and/or measurement range, may be varied by varying a mechanical and/or geometric property of the transfer member, wherein the mechanical and/or geometric property may be a distance, in particular a distance along a traverse direction, between the hinge point, coupling point and/or fibre coupling section, a rotational spring stiffness of the first pivotable arm (i.e. rotational stiffness around the hinge point), a modulus of elasticity of the material of the transfer member, a thickness, length and/or width of a leaf spring element for forming the respective the first pivotable arm, as is explained in more detail below. The pressure sensitivity of the fibre-optic pressure sensor is thereby dependent on the cross-sectional surface (as taken perpendicular to the longitudinal axis) of the first pressure compartment, the mechanical properties of the biasing mechanism, the mechanical properties of the optical fibre (which, assuming using of the same material, are predominantly determined by its diameter) and the mechanical and/or geometric properties of the transfer member. Hence, by keeping all these components, apart from the transfer member, constant, a standardization of the components and assembly process can be obtained, such that an a more efficient industrialized manufacturing process is obtainable. The characteristic of the sensor can then be varied by varying the respective properties of the transfer member, such that a tuneable fibre-optic pressure sensor is obtained that is more efficient to produce.

For example, a transfer mechanism wherein an additional rotational stiffness provided for the first pivotable arm, will experience, at a same pressure level, less movement of the movable outer end and thereby cause a lower strain in the fibre, such that the sensitivity of the sensor is reduced. At the same time, a larger pressure differential can be measured before reaching the maximum strain in the optical fibre, such that the measurement range is increased. A somewhat similar effect is obtained, for instance, when a leverage of the first pivotable arm is increased, as this causes that the movable outer end experiences an increase effective stiffness of the optical fibre. In order to increase the sensitivity it is preferable to use an optical fibre having a relatively low diameter of no more than 100 µm, more preferably no more than 80 µm. Further embodiments will discuss the possibilities for tuning the sensitivity and measurement range in more detail.

A pressure compartment having a variable size may be formed by, for instance, a bellow, a cylinder having a movable piston-like member therein that acts as the movable outer end, or may comprise, as the movable outer end a flexible membrane that may deflect inwardly and outwardly for allowing the variable size of the pressure compartment. Other types of pressure compartments having a variable size may also be employed.

It is noted that the biasing system may be a separate system, but may also be (partly) arranged and/or integrated in the pressure comportment. For example, the pressure compartment may be provided with a elastic membrane that will, in an unloaded state, spring back into its undeformed state; a bellow having a non-zero stiffness may be provided that will also, when unloaded, spring back in its undeformed state (i.e. in a direction towards the retracted position). Additionally, or alternatively, an elastic member, such as a spring and/or elastomeric member, may be arranged in the pressure compartment for urging the movable outer end in a direction towards the retracted position. Additionally, or additionally, the biasing system may also be (partly) arranged and/or integrated in the transfer member, by arranging the transfer member with, and/or at least partly as, an elastic member, such as a spring and/or elastomeric member, that is biased towards the retracted position.

In a preferred embodiment, the transfer member comprises a second pivotable arm that is spaced apart from, and arranged substantially parallel to, the first pivotable arm; wherein the first and second pivotable arms are coupled by means of a translationally movable body and are arranged to pivot with respect to the base frame and to pivot with respect to the translationally movable body; wherein the fibre connecting section is arranged on the translationally movable body that is arranged to move in at least a direction parallel to the longitudinal axis of the first pressure compartment. Such an arrangement allows to limit a movement of the translationally movable body to a translational movement in a direction parallel to the longitudinal axis. By limiting to a translational movement only, rotational movements are effectively blocked, thereby reducing potential non-linear effects at larger angles of deflection of the first pivotable arm and effectively allowing for a larger stroke of the movable outer end, which could increase the measurement range of the pressure sensor. Furthermore, by limiting the degrees of freedom in which the translationally movable may move, the system is effectively stiffened, which in turn leads to an increased resonance frequency of the system enabling faster measurements. Higher frequency pressure variations are thereby detectable. For an ideal linear guidance it is then further preferred that said second pivotable arm is substantially identical to the first pivotable arm. Or in other words, the second pivotable arm is substantially identically shaped, having substantially the same dimensions, and is coupled to the base frame and translationally movable body in substantially the same manner as the first pivotable arm.

In a further preferred embodiment, the translationally movable body is arranged at outer ends of the first and second pivotable arms and wherein the movable outer end of the first pressure compartment is connected to the translationally movable body, in particular wherein the translationally movable body is connected to a central section of the movable outer end. This enables to also employ the transfer member as a linear guiding system that, once the movable outer end is coupled to the translationally movable body, is able to guide the linear movement of the movable outer end, such that no separate guiding mechanism is needed, thereby adding to the ease of assembling the pressure sensor. By fixedly mounting the movable outer end to the translationally movable body, the movement of the movable outer end is thereby also limited to a translational movement in a direction parallel to the longitudinal axis. In particular when using a flexible type of pressure compartment, such as a bellow, this enables a simple guidance of the free end of the bellow, such that the free end of the bellow is able to only move along a direction substantially parallel to the longitudinal axis and rotations of said free end are minimized as much as possible. Hereby, an easier to assemble pressure sensor can be obtained.

It is preferred that the first pivotable arm is a first leaf spring element allowing the pivotable motion by means of bending of the first leaf spring element; and, preferably, wherein the second pivotable arm is a second leaf spring element allowing the pivotable motion by means of bending of the second leaf spring element. By forming said pivotable arms as leaf springs, the pivoting action is allowed by means of bending of the leaf spring elements. A rotational spring stiffness of the respective pivotable arms is then tuneable by varying the relative thicknesses of the leaf spring elements, such that the tuneable sensitivity is obtained while still allowing to obtain a relatively easy to assembly pressure sensor.

In a preferred embodiment, the transfer member comprises a transfer member connecting section and wherein the hinge point of the first pivotable arm, and preferably the hinge point of the second pivotable arm, is arranged on the transfer member connecting section; and wherein the base frame is arranged, preferably at a central section thereof, with a mutually cooperating and/or mutually corresponding connecting section for connecting the respective transfer member connection section thereto. The mutually cooperating connecting sections thereby allow to mount different transfer members in the (elongated) base frame, wherein the different transfer members have different geometric and/or mechanical properties, such that fibre-optic pressure sensors having different sensitivities and/or measurement ranges can be obtained. The other components can thereby be kept the same, and the mutually cooperating connecting sections thereby aid in the industrialization of the manufacturing process.

Preferably, the transfer member is monolithically formed. The transfer member, preferably comprising pivotable arm(s), the transfer member connecting section and translationally movable body, is thereby a single component that can be easily assembled into the pressure sensor. It may be monolithically formed by cutting it from a piece of sheet and/or plate material, such as a metal sheet and/or plate, by a moulding process, or an additive manufacturing process (e.g. 3D printing process). In particular the cutting and/or additive manufacturing process allow for quickly and efficiently producing even small numbers of application specific transfer members, such that it allows for customized pressure sensors that can be efficiently manufactured.

It is preferred that, when the base frame is an elongated base frame having a longitudinal axis, the first pressure compartment is coupled at a first longitudinal outer end section of the elongated base frame and the biasing system is coupled at a second, opposing, longitudinal outer end section of the elongated base frame;
wherein the transfer member is arranged at a central section of the elongated base frame in between the movable outer end and the biasing system and interconnects, preferably by means of the translationally movable body, the movable outer end and biasing system. Such a setup enables a relatively straightforward assembly, as the transfer member may firstly be mounted in the elongated base frame, after which the first pressure compartment and the biasing system can be mounted at the respective opposite ends of the transfer member.

In a preferred embodiment, the biasing system comprises a second pressure compartment that is coupled to the base frame, wherein the second pressure compartment has a variable size and comprises a second internal volume that is arranged to be held at a predefined reference pressure, wherein a movable outer end of the second pressure compartment is movable, in dependence of at least the fluid pressure within the second pressure compartment, with respect to the base frame. Preferably, the movable outer end of the second pressure compartment is movable, in dependence of at least the fluid pressure within the second pressure compartment, with respect to the elongated base frame along the longitudinal axis. The use of a second pressure compartment that can be held at a predefined reference pressure, allows to set a reference pressure around which the pressure sensor is set to operate. For instance, when the pressure sensor is to be used in a specific high-pressure range, the reference pressure can be set in a central point in the range, whereafter the sensitivity can be set by tuning the transfer member accordingly. Thereby, a high-pressure sensor having a predefined working range and sensitivity can be obtained that does not require the use of, for instance, differently sized bellows. Thereby, one is able to obtain pressure sensors operable in various regimes, that can hardly be distinguished from each other from the outside, as the basic components are all the same, such that the industrialized assembly is enabled.

Preferably, the first longitudinal axis is centrally arranged with the first pressure compartment and arranged co-axially with the longitudinal axis of the elongated base frame; and/or wherein the biasing system, in particular the second pressure compartment, comprises a centrally arranged second longitudinal axis that is arranged co-axially with the longitudinal axis elongated base frame; preferably, wherein variable sized reservoirs are arranged such that the respective movable outer ends face each other.. This enables to couple the biasing system to the first pressure compartment in a straightforward manner using, for instance, the translationally movable body.

It is preferred that the first suspended section is arranged substantially parallel to the first longitudinal axis; and wherein a Fibre-Bragg-Grating (FBG) is arranged in the first suspended section. A movement of the movable outer end will thereby cause a movement, with respect to the (elongated) base frame, of the fibre connecting section, such that the strain in the first suspended section is varied. The variation in strain, leads to a variation in the spacing between the gratings of the FBG, causing a change in the spectrum of light that is reflected by the FBG. The change in the spectrum of reflected light can subsequently be converted (using an optical interrogator) into a determined strain, such that, ultimately, a change in pressure in the first internal volume can be determined.

Preferably, the transfer member connecting section is fixed to a radial outer end of the base frame and the transfer member, in particular the fibre connection section thereof, extends into an opening that is formed in a diametrically opposite radial outer end of the base frame; wherein the optical fibre, in particular the first suspended part thereof, extends over at least a part of the opening between the base frame and the fibre connecting section of the transfer member. In case the coupling point is also arranged on the translationally movable body, then the movement of the fibre connecting section is equal to the movement of the coupling point (and thus the translationally movable body), such that no leverage is applied. It thereby enables to provide for a substantially exact transfer of the movement of the movable outer end, to the fibre connection point on the transfer member. Additionally, the transfer member thereby effectively acts as a junction component that ties together the various other components of the sensor, thereby aiding in obtaining a pressure sensor that can be efficiently assembled in an industrialized process.

In a preferred embodiment, the fibre-optic pressure sensor further comprises a housing that is arranged around the base frame, first pressure compartment, biasing system and transfer member for forming a closed-off and sealed interior space comprising said base frame, first pressure compartment, biasing system and transfer member. The housing thereby shields the pressure sensor from harmful influences, such as dirt and/or moisture, from the environment and/or from damage due to, for instance, impacts. Due to the fact that the pressure sensor is customizable through the transfer member, a single type of housing will fit the pressure sensor irrespective of the sensitivity and/or measurement range specified. Such a standardization aids in the obtaining a more industrialized manufacturing process.

Preferably, the first pressure compartment is connected to a first subframe, wherein said first pressure compartment is arranged at a longitudinal outer end of the first subframe, such that said first pressure compartment extends outwardly from the first subframe and such that the movable outer end of the first pressure compartment faces away from the first subframe, wherein the first subframe is received in, and connected to, the base frame;
in particular, wherein the first subframe is received in, and connected to, the first longitudinal outer end section of the elongated base frame, such that the movable outer end of the first pressure compartment extends towards the central section of the elongated base frame. By arranging the first pressure compartment in a first subframe, it can easily and securely be mounted to the elongated base frame, allowing for a relatively straightforward assembly. Preferably, the first subframe and elongated base frame are provided with mutually cooperating alignment elements, such as a set of mutually cooperating contact surfaces, a mutually cooperating set of a protrusion arranged on the one of the first subframe and elongated base frame and a correspondingly shaped recess on the other of the first subframe and elongated base frame for receiving the protrusion therein. The protrusion may be formed as a locking screw. This enables to predetermine the fit of the first subframe to the elongated base frame, such that a relative position of the movable outer end, in at least the initial (e.g. resting) position, within the elongated base frame is predetermined. The first subframe and elongated base frame can then be easily and exactly be assembled in an industrialized manufacturing process.

These features may also be provided for the second pressure compartment, thereby also enabling the above mentioned advantages. Hence, it is preferred that the second pressure compartment is connected to a second subframe, wherein second first pressure compartment is arranged at a longitudinal outer end of the second subframe, such that said second pressure compartment extends from the second subframe and such that the movable outer end of the second pressure compartment faces away from the second subframe, wherein the second subframe is received in, and connected to, the base frame;
in particular, wherein the second subframe is received in, and connected to, the second longitudinal outer end section of the elongated base frame, such that the movable outer end of the second pressure compartment extends towards the central section of the elongated base frame. Preferably, the second subframe and elongated base frame are provided with mutually cooperating alignment elements, such as a set of mutually cooperating contact surfaces, as was described above. In a further preferred embodiment, the first subframe and/or said second subframe are substantially axisymmetric, such that the assembly is further simplified.

Preferably, the outer circumference of the first and/or second subframe are provided with sealing member(s) arranged to engage an inner circumference of the housing, for forming the closed-off and sealed interior space. The first and/or second subframe thereby also, effectively, serve as end-caps for the housing, which reduces the amount of components needed, while also enabling a relatively straightforward assembly as the first and/or second subframe can be inserted into the housing for forming the sealed interior space. The housing is preferably shaped as a longitudinal tubular member.

In a preferred embodiment, the base frame, in particular the elongated base frame, is monolithically formed as a longitudinal tubular body having, at the respective longitudinal outer end sections, a closed circumference, preferably for receiving the first and/or second subframes therein; wherein the central section, that surrounds the transfer member, interconnects the respective longitudinal outer end sections, wherein the central section comprises a partly open circumference for allowing to access, install and/or remove the, transfer member and optical fibre. As only the transfer member needs to be varied for obtaining a customizable fibre-optic pressure sensor, an efficient industrialized manufacturing process for such a customizable fibre-optic pressure sensor is obtainable.

It is preferred that the base frame is made from a different material, preferably having a lower coefficient of thermal expansion, than the transfer member. Due to the modular setup of the fibre-optic pressure sensor, different parts may be made from different materials. The material of the transfer member may be chosen independently of the material of the rest of the fibre-optic sensor, for instance, on the basis of the stiffness properties (e.g. modulus of elasticity) of the material in order to obtain a transfer member having the required mechanical properties, as was described above. Alternatively, or additionally, the material may be chosen on the basis of its thermal coefficient of conductivity. By, for instance, selecting a material having a higher thermal coefficient of expansion for the transfer member than for the (elongated) base frame (which will be longer than the transfer member) an expansion (due to an increase in temperature) of the (elongated) base frame can be at least partly compensated by a larger relative expansion of the transfer member, such that thermally induced strain in the optical fibre, in particular the suspended part of the fibre, is reduced. As the thermally induced strain is reduced in the optical fibre, the bandwidth of the light that is reserved and/or required for a single FBG may be reduced.

Additionally, or alternatively, the optical fibre comprising a third connected section that is connected to the (elongated) base frame at a longitudinally opposing section of the (elongated) base frame as the first connected section, wherein the optical fibre further comprises a second suspended section that is suspended in between the second connected section and the third connected section. The second suspended section may thereby act as an additional stiffness for moving the fibre connecting section, and thereby the movable outer end of the first pressure compartment. Preferably, a second measurement section (e.g. FBG) is arranged in said second suspended section. As the second connected section is arranged in between the first and third connected sections, a movement of the fibre connection section of the transfer member in one direction, will lead to a shortening of one of the first and second suspended sections and a stretching of the other of the first and second suspended sections, thereby effectively leading to a doubling resolution of the measured signals. Additionally, undesired thermal effects (i.e. thermal expansion/contraction of the pressure sensor and thermal-based changes in the reflective properties of the optical fibre and measurement sections) will lead to signal shifts in the same direction, such that these can be cancelled by taking a differential measurement between both measurement sections.

In a second aspect, the present disclosure relates to a method of manufacturing a fibre-optic pressure sensor according to any of the preceding embodiments, comprising the steps of:
- providing a base frame, preferably an elongated base frame, first pressure compartment comprising a movable outer end, biasing system, transfer member and an optical fibre comprising a measurement section;
- mounting the transfer member to the base frame;
- mounting said first pressure compartment to the base frame and coupling the movable outer end to the transfer member;
- coupling, preferably by means of the transfer member, the biasing system and the movable outer end, such that the movable outer end is urged towards an initial position by the biasing system;
- fixing the optical fibre comprising the measurement section to the transfer member and the base frame. Such a manufacturing process can be efficiently organized for fibre-optic pressure sensors according to the first aspect having different predetermined measurement ranges and/or sensitivities. Only the transfer member needs to be customized, but as the interfaces of the transfer member to the other components is standardized, different types of transfer members are easily assembled.

These benefits are even more pronounced for a further embodiment of the manufacturing method, wherein the method further comprising the steps of:
- specifying a sensitivity of the pressure sensor;
- determining, on the basis of the specified sensitivity, a mechanical and/or geometric property of the transfer member, preferably wherein the mechanical and/or geometric property is at least one of a distance, in particular a distance along a traverse direction, between the hinge point, coupling point and/or fibre coupling section, a rotational spring stiffness of the first, and preferably the second, pivotable arm(s), an modulus of elasticity of the material of the transfer member, a thickness, length and/or width of one or more leaf spring element(s) for forming the respective one or more pivotable arms;
wherein the step of providing the base frame, first pressure compartment comprising the movable outer end, biasing system, transfer member and the optical fibre comprising the measurement section comprises providing a transfer member having the determined mechanical and/or geometric property.

The present invention is further illustrated by the following figures, which show preferred embodiments of the different aspects of the present disclosure, and are not intended to limit the scope of the invention in any way, wherein:
- Figure 1 schematically shows, in a three-dimensional perspective view, an embodiment of the fibre-optic pressure sensor according to the present disclosure.
- Figure 2A and 2B schematically show, in a cross-sectional view, the embodiment of the fibre-optic pressure sensor of figure 1.
- Figure 3 schematically shows, in a three-dimensional mainly upward oriented perspective view, the embodiment of the fibre-optic pressure sensor of figure 1 wherein the housing is removed.
- Figure 4 shows, in a three-dimensional mainly downward oriented perspective view, the embodiment of the fibre-optic pressure sensor of figure 1 wherein the housing is removed.
- Figures 5A and 5B schematically show, in a cross-sectional views, the first and second subframes of the fibre-optic pressure sensor of figure 1.
- Figures 6A - 6C schematically show, as frontal views, various transfer members that may be used in a fibre-optic pressure sensor according to the present disclosure.

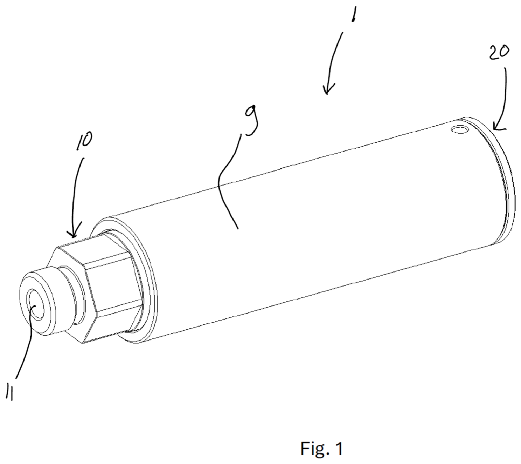

Figure 1 schematically shows an embodiment of the fibre-optic pressure sensor 1, hereafter pressure sensor 1, according to the present disclosure. The pressure sensor 1 is enclosed in a substantially tubular housing 90 having open outer ends wherein the respective first and second subframes 10, 20 are arranged.

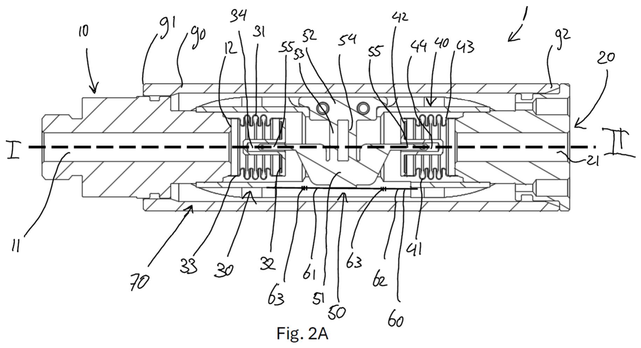

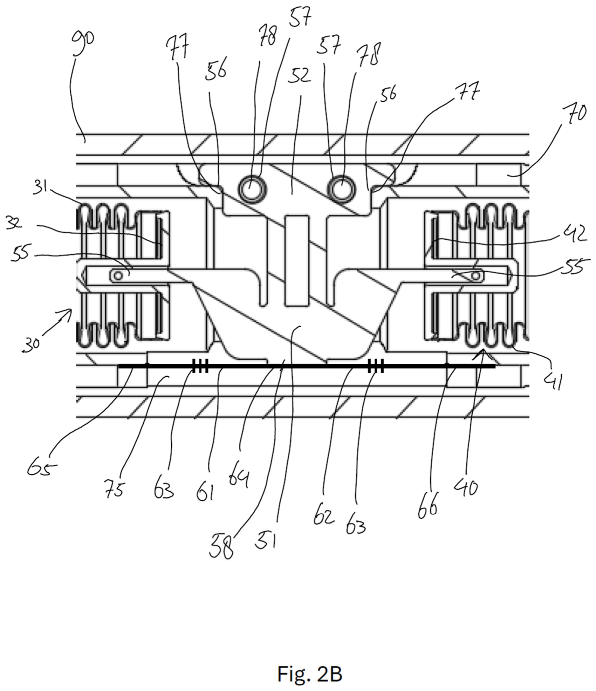

The first subframe 10 is extending inwardly in the housing 90 from a first outer end 91 thereof and is seen to comprise a first through hole 11 for providing a fluid connection to the internal volume inside the first pressure compartment 30 (see figure 2A). The first pressure compartment 30 is formed as a first bellow 31 having a fixed side 33, that is arranged stationary with the first subframe 10, and a movable outer end 32 that is arranged to be movable along the longitudinal axis I of the first pressure compartment 30. The first bellow 31 extends from the internal end 12 of the first subframe 10 towards the transfer member 50. The movable outer end 32 is arranged with a centrally arranged blind mounting hole 34 that is configured for receiving a connecting end 55 of the transfer member 50 therein. The connecting end 55 is fixed in the centrally arranged blind mounting hole 34, for instance by means of a glue. A tube, or the like, may be inserted into the first through hole 11 bringing the internal volume inside the first pressure compartment 30 in fluid connection with the pressure to measure. Alternatively, the pressure sensor 1 may be directly arranged inside of the fluid body (i.e. reservoir) whose fluid pressure is to be determined.

The opposing second outer end 92 of the housing 90 is seen to have the second subframe 20 inserted therein. Similar to how the first subframe 10 is mounted, the second subframe 20 extends inwardly into the housing 90. A second bellow 41, comprising a fixed side 43 that is fixed to the internal end 22 of the subframe, extends towards the centre of the pressure sensor 1. At the opposite end of the second bellow 40, the movable outer end 42 (that is arranged to be movable along the longitudinal axis II of the second pressure compartment 40) comprises a centrally arranged blind mounting hole 44 that is configured for receiving a connecting end 55 of the transfer member 50 therein. In the current example, the first and second bellows 31, 41 are arranged such that the respective longitudinal axes I, II are co-axially arranged. The internal volume inside the second bellow 41 is accessible through a second through hole 21 extending through the second subframe 20. In the current embodiment, a second bellow 41 is provided that can be set to a predefined reference pressure through the second through hole 21. The second through hole 21 may be sealed after pressurizing the internal volume in the second bellow 41, such that a differential pressure reading with respect to the reference pressure may be determined using the pressure sensor 1. The second bellow 41 thereby acts as a biasing system acting to work against a movement of the movable outer end of the first bellow 31. Alternatively, or additionally, an elastic element, such as a mechanical spring, may be arranged to act as a biasing system.

In between the respective subframes 10, 20 a transfer member 50 is arranged. The transfer member 50, of the current example, comprises a translationally movable body 51 whose movement is limited to (only) a substantially translational movement along a direction that is substantially parallel to the respective longitudinal axes I, II of the first and second bellows 31, 41. The respective connecting ends 55 of the transfer member 50 are arranged integrally with the translationally movable body 51 at the respective longitudinal outer ends thereof. The connecting ends 55 align with the respective longitudinal axes I, II, such that the movable outer ends 32, 42 are guided such that their movement is also limited to a translational movement. Hereby, a substantially uniform expansion and contraction of the bellows 31, 41 (i.e. first and second pressure compartments 30, 40) is obtained, such that an accurate pressure reading can be obtained.

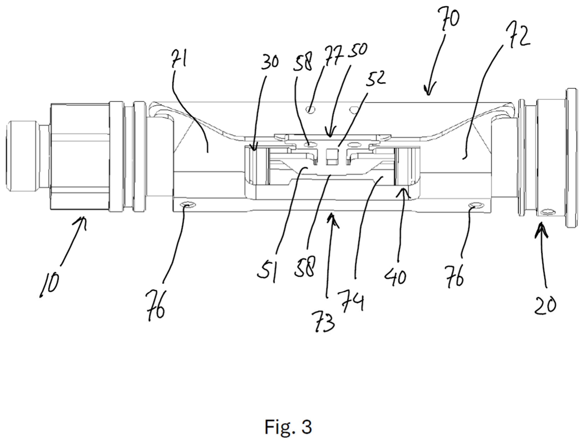

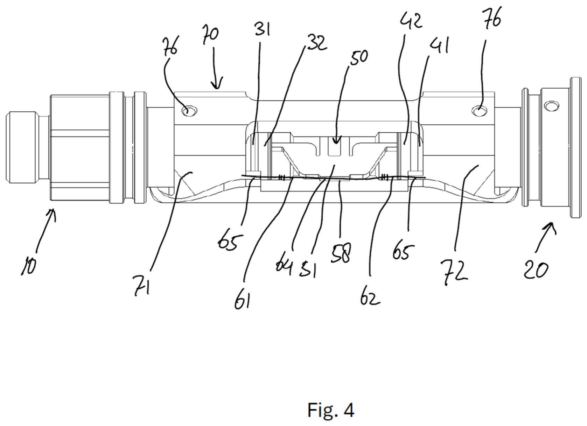

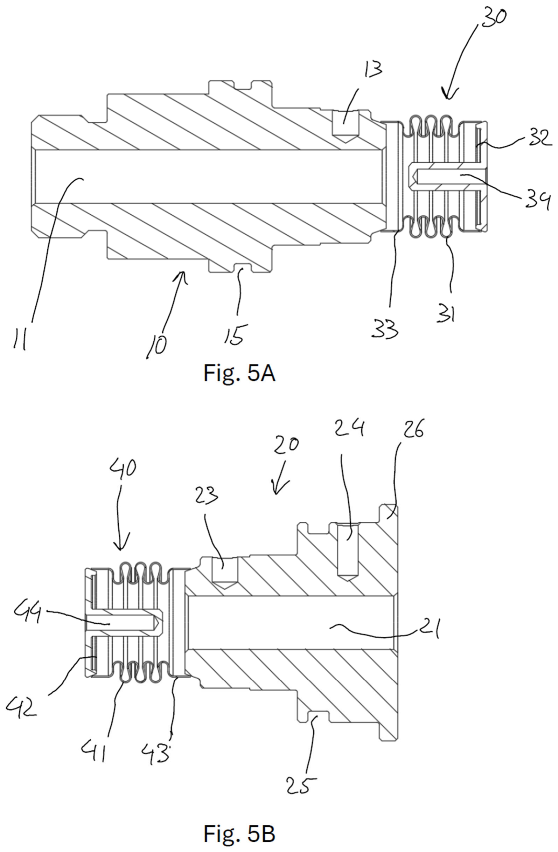

The first subframe 10 (with the first bellow 30 connected thereto), second subframe 20 (with the second bellow 40 connected thereto) and the transfer member 50 are all connected to an elongated base frame 70 (also see figures 3 and 4). In the current embodiment, the elongated base frame 70 is, preferably monolithically, formed as a substantially tubular longitudinal body having, at the respective longitudinal outer end sections 71, 72, a closed circumference for receiving the first and second subframes 31, 32 therein. The elongated base frame 70 comprises alignment features, which may be shaped as through-holes 76 (in particular threaded through holes) that allow for an alignment pin (not shown), such as an alignment screw, to allow for a predefined alignment of the respective subframes 10, 20 in the elongated base frame 70. The subframes 10, 20 may then be arranged with cooperating alignment and/or fixation recesses 13, 23 that are arranged for receiving the alignment pin therein (see figures 5A and 5B), such that a predefined and unique position and orientation of the respective subframe 10, 20 with respect to the elongated base frame 70 is obtained.

A central section 73 interconnects the respective longitudinal outer end sections 71, 72 and surrounds the transfer member 50. The central section 73 comprises a partly open circumference for allowing to access to install and/or remove the transfer member 50 and optical fibre 60. The partly open circumference is seen to comprise an upper through-opening 74 that is preferably wide enough to allow the transfer member 50 to be inserted through and a lower through-opening 75 that is preferably wide enough to allow the transfer member 50 to be inserted through.

The transfer member 50, at least in the current embodiment, is provided with a pair of parallel arranged first and second pivotable arms; in this embodiment formed as leaf springs 53, 54. One end of each leaf spring 53, 54 is connected to the translationally movable body 51, whereas the other end of each leaf spring 53, 54 is connected to a connecting section 52 (also referred to as connector 52) of the transfer member 50. A double bending of the leaf springs (that can be described as a substantially S-shaped bending) with respect to the respective coupled outer ends, enables the leaf springs to pivot with respect to the connector 52 and the translationally movable body 51, such that the translationally movable body 51 is kept substantially parallel to the connector 52. A displacement of the translationally movable body 51 in the traverse direction, i.e. in the plane of the transfer member and in a direction perpendicular to the longitudinal axes I, II, will be neglectable as the translational longitudinal movement of the translationally movable body 51 are relatively small. The transfer member 50 according to the current embodiment can easily be monolithically formed as a single plate-like structure.

Note that the leaf springs 53, 54, as described above, thereby effectively act as flexible hinges of the pivotable arms. In similar embodiments, the flexible hinges may for instance be replaced by other types of hinges allowing the pivoting movement of the pivotable arms with respect to the connector 52 and/or translationally movable body 51. As the movement of the translationally movable body 51 is limited to the longitudinal translational movement, vibrations acting on the pressure sensor in other directions, will have a neglectable effect on the movement of the translational movable body. Such a pressure sensor 1 will thereby be suitable for use in environments exposed to relatively harsh vibrations.

The connector 52 and central section 73 of the elongated base frame 70 are arranged with mutually cooperation alignment features 56, 77 for providing a unique fit of the connector 52 into the central section 73. The alignment features on the connector 52 comprise a spaced apart pair of L-shaped abutment surfaces 56 that are arranged to abut (i.e. contact) a set of correspondingly shaped L-shaped abutments surfaces 77 that are arranged on the central section 73. The vertically arranged surfaces (i.e. the surfaces perpendicular to the longitudinal axes I, II) of the L-shaped abutments surfaces 56 thereby provide for fixing the connector 52 with respect to the elongated base frame 70 in a direction parallel to the longitudinal axes I, II as the connector sits (at least partially) in between the respective vertically arranged surfaces of the L-shaped abutments surfaces 77 of the central section 73. The horizontally arranged surfaces (i.e. the surfaces parallel to the longitudinal axes I, II) of the L-shaped abutments surfaces 56 thereby provide for fixing the connector 52 with respect to the elongated base frame 70 in an outward radial direction perpendicular to the longitudinal axes I, II an in the plane of the transfer member 50 as the connector sits (at least partially) on top of the respective horizontally arranged surfaces of the L-shaped abutments surfaces 77 of the central section 73. The central section 73 and the connector 52 may further be arranged with one or more mutually aligning through holes 57, 78 that are arranged for receiving an alignment pin (or alignment screw) therein for locking a position of the connector 52, and thereby the transfer member 50, with respect to the central section 73.

The transfer member 50 further comprises a fibre connecting section 58 that is arranged for fixing an optical fibre 60 thereto. The fibre connection section 58 is arranged at a traverse outer end of the transfer member 50 that is substantially opposite to the connector 52. As such, the transfer member spans substantially the full width of the elongated base frame 70. In the current embodiment, the fibre connecting section is arranged at the traverse outer end of the translationally movable body 51, such that the second connected section 64 of optical fibre 60 is forces to move with a movement of the translationally movable body 51. The optical fibre 60 is furthermore fixed to the first longitudinal outer end section 71 of the elongated base frame 70 at a first connected section 65 of the optical fibre 60, whereby a first suspended part 61 of the optical fibre, comprising a Fibre-Bragg Grating (FBG) 63, spans a part of the lower through-opening 75 between the first and second connected sections 65, 64. The pressure sensor 1 may further be arranged with a second suspended part 62 of the optical fibre 60 that spans a part of the lower through-opening 75 between the second and a third connected sections 64, 66. At the third connected section 66 of the optical fibre 60, the optical fibre 60 is fixed to the second longitudinal outer end section 72 of the elongated base frame 70. In order to allow for a temperature compensated measurement of the pressure, the second suspended part 62 may also be arranged with an FBG 63.

An increase in pressure in the first bellow 31 will lead to an expansion of the first bellow 31 by moving the movable outer end 32 in a direction towards the second subframe 20, thereby causing a translational movement of the translationally movable body 51 towards the second subframe 20. The second connected section 65 of the optical fibre 60 is thereby also forced to move in the same direction, causing an increase in tensile strain (i.e. stretching) in the first suspended part 61 and a decrease in tensile strain (i.e. shortening) in the second suspended part 62. These changes in strain in the respective suspended parts 61, 62 cause a change in the spectrum of light that is reflected by the FBG(s) 63. This change in the light spectrum can subsequently be measured, allowing one to deduce the pressure in the first bellow 31.

Figures 5A and 5B show the first and second subframes 10, 20, including the respective first and second pressure compartments 30, 40, in isolation from the rest of the pressure sensor 1. The subframes 10, 20 are substantially axisymmetric, having only some minor features that are not axisymmetric, such as the alignment and/or fixation recess 13, 23, 24. The second subframe 20 comprises an additional aligning and/or fixation recess 24 for fixing the housing 90 to the pressure sensor 1. The subframes 10, 20 may further comprise circumferential recesses 15, 25 for arranging a flexible sealing element, such as an O-ring, therein for providing a seal between the respective subframe 10, 20 and an interior surface of the housing 90, such that a sealed interior space of the pressure sensor 1 may be obtained.

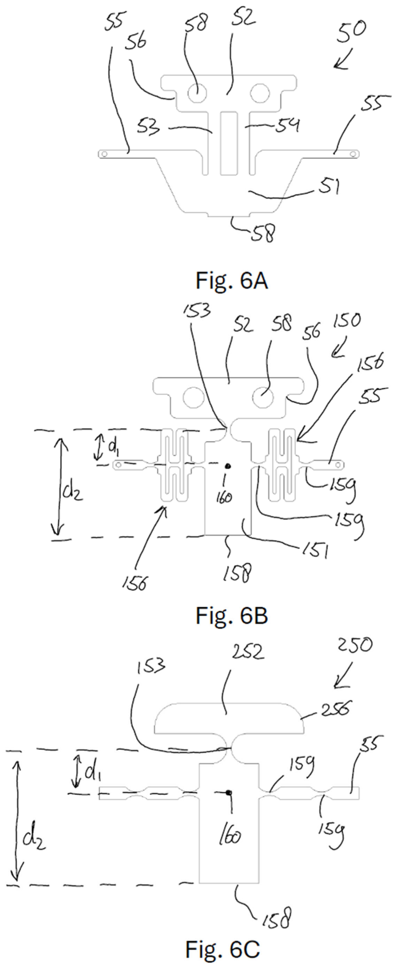

Figures 6A - 6C show a various different types of transfer members 50, 150, 250 that may be mounted inside of the pressure sensor 1 for obtaining a pressure sensor 1 having a predefined characteristic, such as a sensitivity and/or measurement range. Transfer member 50, that has already been described in relation to figures 1 - 4, comprises, effectively, a linear guiding mechanisms due to the parallel arranged leaf springs 53, 54, such that a movement of the translationally movably body 51 is equal to a movement of the movable outer end 32, or movable outer ends 32, 42. The characteristic of the pressure sensor 1 may, for instance, be varied by varying a bending stiffness of the respective leaf springs 53, 54; stiffer leaf springs 53, 54 will thereby lead to a decreased sensitivity of the pressure sensor 1. Although practically challenging, the leaf springs 53, 54 may be replaced by a negative-stiffness mechanism, such that the sensitivity of the pressure sensor can even be increased (with respect to the "base case" of practically zero-stiffness leaf springs 53, 54).

Figure 6B shows a transfer member 150 according to an alternative embodiment. A single pivotable arm 151 is shown that is connected to the connector 52 by means of a flexible hinge 153. The single pivotable arm 151 thereby effectively acts as a leverage arm, whereby a movement of the second location 160 on the pivotable arm is amplified to become a larger movement of the fibre connection section 158 at the end of the pivotable arm 151, whereby the leverage ratio is determined by d₂/d₁, whereby d₁ is defined as the distance between the pivoting point of the flexible hinge 153 and the second location 160 and d₂ is defined as the distance between the pivoting point of the flexible hinge 153 (i.e. the first location) and the fibre connection section 158 (i.e. the third location). Such a leverage arm can be employed for increasing the sensitivity of the pressure sensor 1. However, as the tensile stiffness of the optical fibre 60 is thereby also increased, it is preferably to employ an optical fibre 60 having a relatively low diameter (i.e. no more than 100 µm, preferably no more than 80 µm). In combination with an optical fibre 60 having a relatively high stiffness (i.e. large diameter) a relatively stiff system can be obtained having a lower sensitivity, but higher measurement range. The transfer member 150 furthermore comprises a flexible coupling section 156 that is arranged between the connecting end 55 and pivotable arm 151 at both sides of the pivotable arm 151. The flexible coupling section 156 may be arranged in between a pair of flexible hinges 159, such that only tensile and/or compressive forces are applied onto the flexible coupling section 156. The use of such flexible coupling sections 156 allows for reducing the amount of force that is transferred to the optical fibre 60, thereby allowing to increase a measurement range and/or reduce a sensitivity of the pressure sensor 1. It may furthermore serve as a protective measure for shielding the optical fibre 60 from overloading due to, for instance, overpressure events, wherein the pressure sensor 1 is exposed to higher than intended for pressures.

Figure 6C shows a transfer member 250 according to yet another embodiment. The transfer member comprises a single pivotable arm 151 that is substantially similar to the pivotable arm 153 of transfer member 150. Transfer member 250, however, does not comprise the flexible coupling section 156. The connecting ends 55 are, similar to transfer member 150, connected to the pivotable arm 153 by means of pairs of flexible hinges 159 for decoupling the rotation of the pivotable arm 153 from the movement of the connecting ends 55. Transfer member 250 also shows an alternative connector 252 having differently shaped abutment surfaces 256 and no through-holes. The elongated base frame 70 may be shaped accordingly then for enabling a unique fit with transfer member 250.

For manufacturing the pressure sensor 1 having a predefined characteristic, such as a sensitivity and/or measurement range, firstly a suitable transfer member 50, 150, 250 is provided. The transfer member 50, 150, 250 is mounted to the elongated base frame 70. This may be done by inserting the transfer member 50, 150, 250 through a through-opening 74, 75 arranged in the central section 73 of the elongated base frame 70. The connector 52 is then received in a correspondingly shaped connecting section in the elongated base frame. In particular, the respective mutually cooperating alignment features 56, 77 are brought into contact with each other and, preferably, the alignment pins are also arranged through mutually aligning though holes 57, 78, such that the transfer member 50, 150, 250 is securely fixed in its predefined unique position.

Thereafter the following steps are performed. The first and second subframes 10, 20, including the respective first and second pressure compartments 30, 40, are inserted through the respective first and second longitudinal outer end sections 71, 72 of the elongated base frame 70. The connection ends 55 of the transfer member 50 are received in the respective centrally arranged blind mounting holes 34, 44 and fixed therein, preferably by means of a glue, The first and second subframes 10, 20 are aligned and fixed in the elongated base frame 70 by means of the therefore arranged alignment features.

The optical fibre 60 is installed, before, or after, mounting the first and second subframes 10, 20. The optical fibre 60 is connected, for instance by means of a glue, onto the fibre connecting section 58, 158 and onto the respective longitudinal outer end section(s) 71, 71 for forming the respective first and second and/or third connected sections 65, 64, 66.

These steps are followed by installing the housing 90 over the first and second pressure compartments 30, 40, the elongated base frame 70 and transfer member 50 for forming the sealed inner space of the pressure sensor 1. The only variation needed, for varying a characteristic of the pressure sensor 1, is providing a suitable transfer member 50, 150, 250. All the other components can thereby be standardized and manufactured in larger quantities. Additionally, a dedicated assembly line can be set up for efficiently handling all these standardized components. Finally, although each transfer member 50, 150, 250 may have different geometric and/or mechanical characteristics, the interfaces with the rest of the pressure sensor, such as the connector 52, connecting ends 55 and/or fibre connecting section 58, 158 are also standardized, such that mounting of all these different transfer members 50, 150, 250 can also a standardized procedure, that is easily standardized in an assembly line.

The various embodiments shown, and further variations thereof, can be combined for forming further embodiments. Additionally, the present invention is not limited to the embodiments shown, but also extends to other embodiments falling within the scope of the appended claims.

## Claims

1. Fibre-optic pressure sensor for measuring a fluid pressure, the sensor comprising:
- a base frame;
- a first pressure compartment having a variable size that is coupled to the base frame, wherein the first pressure compartment comprises an input arranged to receive a fluid, the pressure of which is to be measured, wherein a movable outer end of the first pressure compartment is movable within the base frame along a first longitudinal axis of the first pressure compartment between a retracted position and an extended position;
- a biasing system arranged for urging the movable outer end of the first pressure compartment in a direction towards the retracted position;
- an optical fibre comprising a first connected section that is connected to the base frame and a second connected section that is arranged to move upon a movement of the movable outer end of the first pressure compartment, wherein the optical fibre further comprises a first suspended section that is suspended in between the first connected section and the second connected section, wherein a measurement section is arranged in said first suspended section;
- a transfer member comprising a first pivotable arm that is pivotally coupled to the base frame at a hinge point, wherein the movable outer end of the first pressure compartment is coupled at a coupling point, at a distance from the hinge point, to the first pivotable arm, such that a movement of the movable outer end of the first pressure compartment causes a pivoting movement of the first pivotable arm;
wherein the transfer member further comprises a fibre connecting section whereto the second connected section of the optical fibre is fixed, wherein the fibre connection section is arranged to move, upon a movement of the first pivotable arm, such that the pivoting movement of the first pivotable arm causes a stretching or shortening of the first suspended section of the optical fibre.

2. Fibre-optic pressure sensor according to claim 1, wherein the transfer member comprises a second pivotable arm that is spaced apart from, and arranged substantially parallel to, the first pivotable arm; wherein the first and second pivotable arms are coupled by means of a translationally movable body and are arranged to pivot with respect to the base frame and to pivot with respect to the translationally movable body; wherein the fibre connecting section is arranged on the translationally movable body that is arranged to move in at least a direction parallel to the longitudinal axis of the first pressure compartment;
preferably, wherein said second pivotable arm is substantially identical to the first pivotable arm; and/or
preferably, wherein the translationally movable body is arranged at outer ends of the first and second pivotable arms and wherein the movable outer end of the first pressure compartment is connected to the translationally movable body, in particular wherein the translationally movable body is connected to a central section of the movable outer end.

3. Fibre-optic pressure sensor according to any of the preceding claims, wherein the first pivotable arm is a first leaf spring element allowing the pivotable motion by means of bending of the first leaf spring element; and, preferably, wherein the second pivotable arm is a second leaf spring element allowing the pivotable motion by means of bending of the second leaf spring element.

4. Fibre-optic pressure sensor according to any of the preceding claims, wherein the transfer member comprises a transfer member connecting section and wherein the hinge point of the first pivotable arm, and preferably the hinge point of the second pivotable arm, is arranged on the transfer member connecting section; and wherein the base frame is arranged, preferably at a central section thereof, with a mutually cooperating and/or mutually corresponding connecting section for connecting the respective transfer member connection section thereto; and/or wherein the transfer member is monolithically formed.

5. Fibre-optic pressure sensor according to any of the preceding claims, wherein the base frame is an elongated base frame having a longitudinal axis, wherein the first pressure compartment is coupled at a first longitudinal outer end section of the elongated base frame and the biasing system is coupled at a second, opposing, longitudinal outer end section of the elongated base frame;
wherein the transfer member is arranged at a central section of the elongated base frame in between the movable outer end and the biasing system and interconnects, preferably by means of the translationally movable body, the movable outer end and biasing system.

6. Fibre-optic pressure sensor according to any of the preceding claims, wherein the biasing system comprises a second pressure compartment that is coupled to the base frame, wherein the second pressure compartment has a variable size and comprises a second internal volume that is arranged to be held at a predefined reference pressure, wherein a movable outer end of the second pressure compartment is movable, in dependence of at least the fluid pressure within the second pressure compartment, with respect to the base frame.

7. Fibre-optic pressure sensor according to any of the preceding claims, wherein the first longitudinal axis is centrally arranged with the first pressure compartment and is arranged co-axially with the longitudinal axis of the elongated base frame; and/or
wherein the biasing system, in particular the second pressure compartment, comprises a centrally arranged second longitudinal axis that is arranged co-axially with the longitudinal axis elongated base frame;
preferably, wherein variable sized reservoirs are arranged such that the respective movable outer ends face each other.

8. Fibre-optic pressure sensor according to any of the preceding claims, wherein the first suspended section is arranged substantially parallel to the first longitudinal axis; and wherein a Fibre-Bragg-Grating (FBG) is arranged in the first suspended section; and/or
wherein the transfer member connecting section is fixed to a radial outer end of the base frame; and wherein the transfer member, in particular the fibre connection section thereof, extends into an opening that is formed in a diametrically opposite radial outer end of the base frame; wherein the optical fibre, in particular the first suspended part thereof, extends over at least a part of the opening between the base frame and the fibre connecting section of the transfer member.

9. Fibre-optic pressure sensor according to any of the preceding claims, wherein the fibre-optic pressure sensor further comprises a housing that is arranged around the base frame, first pressure compartment, biasing system and transfer member for forming a closed-off and sealed interior space comprising said base frame, first pressure compartment, biasing system and transfer member.

10. Fibre-optic pressure sensor according to any of the preceding claims, wherein the first pressure compartment is connected to a first subframe, wherein said first pressure compartment is arranged at a longitudinal outer end of the first subframe, such that said first pressure compartment extends outwardly from the first subframe and such that the movable outer end of the first pressure compartment faces away from the first subframe, wherein the first subframe is received in, and connected to, the base frame;
in particular, wherein the first subframe is received in, and connected to, the first longitudinal outer end section of the elongated base frame, such that the movable outer end of the first pressure compartment extends towards the central section of the elongated base frame; and/or
preferably, wherein said first subframe and/or said second subframe are substantially axisymmetric.

11. Fibre-optic pressure sensor according to at least claim 6, wherein the second pressure compartment is connected to a second subframe, wherein second first pressure compartment is arranged at a longitudinal outer end of the second subframe, such that said second pressure compartment extends from the second subframe and such that the movable outer end of the second pressure compartment faces away from the second subframe, wherein the second subframe is received in, and connected to, the base frame;
in particular, wherein the second subframe is received in, and connected to, the second longitudinal outer end section of the elongated base frame, such that the movable outer end of the second pressure compartment extends towards the central section of the elongated base frame.

12. Fibre-optic pressure sensor according to claim 9 and any of the claims 10 -11, wherein the outer circumference of the first and/or second subframe are provided with sealing member(s) arranged to engage an inner circumference of the housing, for forming the closed-off and sealed interior space.

13. Fibre-optic pressure sensor according to any of the preceding claims, wherein the base frame, in particular the elongated base frame, is monolithically formed as a longitudinal tubular body having, at the respective longitudinal outer end sections, a closed circumference, preferably for receiving the first and/or second subframes therein; wherein the central section, that surrounds the transfer member, interconnects the respective longitudinal outer end sections, wherein the central section comprises a partly open circumference for allowing to access, install and/or remove the, transfer member and optical fibre; and/or wherein the base frame is made from a different material, preferably having a lower coefficient of thermal expansion, than the transfer member.

14. Method of manufacturing a fibre-optic pressure sensor according to any of the preceding claims, comprising the steps of:
- providing a base frame, first pressure compartment comprising a movable outer end, biasing system, transfer member and an optical fibre comprising a measurement section;
- mounting the transfer member to the base frame;
- mounting said first pressure compartment to the base frame and coupling the movable outer end to the transfer member;
- coupling, preferably by means of the transfer member, the biasing system and the movable outer end, such that the movable outer end is urged towards an initial position by the biasing system;
- fixing the optical fibre comprising the measurement section to the transfer member and the base frame.

15. Method of manufacturing according to claim 14, further comprising the steps of:
- specifying a sensitivity of the pressure sensor;
- determining, on the basis of the specified sensitivity, a mechanical and/or geometric property of the transfer member, preferably wherein the mechanical and/or geometric property is at least one of a distance, in particular a distance along a traverse direction, between the hinge point, coupling point and/or fibre coupling section, a rotational spring stiffness of the first, and preferably the second, pivotable arm(s), an modulus of elasticity of the material of the transfer member, a thickness, length and/or width of one or more leaf spring element(s) for forming the respective one or more pivotable arms;
wherein the step of providing the base frame, first pressure compartment comprising the movable outer end, biasing system, transfer member and the optical fibre comprising the measurement section comprises providing a transfer member having the determined mechanical and/or geometric property.
